# EUROPÄISCHE PATENTSCHRIFT

(11) **EP 1 507 092 B1**
(45) Veröffentlichungstag und Bekanntmachung des Hinweises auf die Patenterteilung: **09.05.2007**
(21) Anmeldenummer: 03102543.0
(22) Anmeldetag: 14.08.2003
(51) Int. Cl.: F16D 48/08, F16H 3/00, F16H 61/688

(54) **Verfahren zur Steuerung eines Doppelkupplungsgetriebes**
Method for controlling a dual clutch transmission
Procédé de commande d'une transmission à doubles embrayages

(43) Veröffentlichungstag der Anmeldung: 16.02.2005
(73) Patentinhaber: Getrag Ford Transmissions GmbH, 50725 Köln (DE)
(72) Erfinder: Krauss, Christian, 50737, Köln (DE); Schwekutsch, Michael, 45711, Datteln (DE)
(74) Vertreter: Drömer, Hans-Carsten

(56) Entgegenhaltungen:
- EP-A- 1 271 007
- EP-A- 1 357 309
- DE-A- 3 812 327
- DE-A- 10 015 296
- DE-A- 10 043 060
- DE-A- 10 156 940

## Beschreibung

Die Erfindung betrifft ein Verfahren zur Steuerung eines Doppelkupplungsgetriebes, wobei über eine erste Kupplung und über einen ersten Getriebepfad Drehmoment von einer Antriebswelle auf eine Ausgangswelle übertragen wird. Ferner betrifft die Erfindung ein Doppelkupplungsgetriebe, das zur Durchführung eines derartigen Verfahrens eingerichtet ist.

Aus der gattungsbildende DE 38 12 327 A1 ist ein Doppelkupplungsgetriebe bekannt, bei dem während des Anfahrens eines Fahrzeuges unter Kupplungsschlupf neben dem Getriebepfad des ersten Ganges auch der Getriebepfad des zweiten Ganges aktiviert wird. Hierdurch soll erreicht werden, dass die durch den Schlupf entstehende Verlustwärme sich auf zwei Kupplungen verteilt und daher eine Schädigung der Kupplung des ersten Ganges vermieden wird. Sobald an einer der Kupplungen Drehzahlgleichheit erreicht ist, wird der zugehörige Getriebepfad deaktiviert.

Aus der nicht vorveröffentlichten EP1 357 309 A2 ist ein Verfahren zur Steuerung eines Anfahrvorganges mit einem Doppelkupplungsgetriebe bekannt, bei dem über eine erste schlupfende Kupplung und über einen ersten Getriebepfad Drehmoment von einer Antriebswelle an eine Ausgangswelle übertragen wird. Wenn das über die erste Kupplung übertragene Drehmoment die aktuelle Drehmomentkapazität der ersten Kupplung überschreitet, z. B. weil die erste Kupplung zu heiß geworden ist, wird eine zweite Kupplung zumindest teilweise geschlossen um über einen zweiten Getriebepfad ein Zusatzdrehmoment von der Antriebswelle an die Ausgangswelle zu übertragen. Diese Steuerung der Kupplungen dient ausschließlich dem Schutz der ersten Kupplung vor Überlastung.

Des Weiteren ist es bekannt, dass Getriebepfade vor einer Überschreitung ihrer Drehmomentkapazität geschützt werden müssen. Insbesondere in den unteren Gängen ist das maximal von einem Getriebe übertragbare Drehmoment in der Regel geringer als das maximale Drehmoment des Motors. Daher wird der Motor üblicherweise in Abhängigkeit vom eingelegten Gang in seiner Leistungsabgabe heruntergeregelt, um das Getriebe zu schützen. Nachteilig hieran ist, dass das entsprechende Leistungspotential des Motors ungenutzt verloren geht.

Vor diesem Hintergrund war es Aufgabe der vorliegenden Erfindung, eine verbesserte Leistungsübertragung von einem Motor über ein Getriebe zu ermöglichen.

Diese Aufgabe wird durch ein Verfahren mit den Merkmalen des Anspruchs 1 sowie durch ein Doppelkupplungsgetriebe mit den Merkmalen des Anspruchs 8 gelöst. Vorteilhafte Ausgestaltungen sind in den Unteransprüchen enthalten.

Das erfindungsgemäße Verfahren dient der Steuerung eines Doppelkupplungsgetriebes, wobei ein Doppelkupplungsgetriebe definitionsgemäß (mindestens) zwei separat betätigbare Kupplungen aufweist, über welche verschiedene Getriebepfade zwischen einer Antriebswelle und einer Ausgangswelle des Getriebes aktiviert werden können. Das Verfahren geht von einem Zustand aus, bei welchem (in der Regel zunächst ausschließlich) über eine erste Kupplung und einen ersten Getriebepfad Drehmoment von der Antriebswelle zur Ausgangswelle übertragen wird. Gemäß dem Verfahren wird dann eine zweite Kupplung des Doppelkupplungsgetriebes zumindest teilweise geschlossen, um über einen zweiten Getriebepfad ein Zusatzdrehmoment von der Antriebswelle an die Ausgangswelle zu übertragen, wenn das über die erste Kupplung und den ersten Getriebepfad übertragene Drehmoment eine vorgegebene Obergrenze erreicht. Die Größe des über den ersten Getriebepfad übertragenen Drehmoments kann dabei z.B. durch eine Messung erfasst oder aus geeigneten Betriebsparametern des Fahrzeugs erschlossen werden. Die genannte Obergrenze dieses Drehmoments wird so gewählt, dass ein Schutz des ersten Getriebepfades vor einer Drehmomentüberlastung gewährleistet ist. Typischerweise wird die Obergrenze in Abhängigkeit von den aktuellen Betriebsparametern, insbesondere von der Gangstufe des ersten Getriebepfades vorgegeben.

Durch das beschriebene Verfahren wird der Schutz eines Doppelkupplungsgetriebes vor einer Drehmomentüberlastung erreicht, indem bei Bedarf ein zusätzlicher Übertragungsweg für ein Motormoment eröffnet wird. Mit Hilfe des Zusatzdrehmoments kann dann die Leistungsfähigkeit des Motors weiter (in der Regel bis zu ihrem Maximum) ausgeschöpft werden, ohne dass das Getriebe mechanisch stabiler und damit schwerer und aufwändiger ausgelegt werden müsste. Die bessere Ausnutzung der Motorleistung kommt insbesondere in den unteren Gängen zum Tragen, da bei diesen typischerweise die geringste Drehmoment-Übertragungskapazität vorhanden ist. Mit dem Verfahren ist daher insbesondere ein schnelleres Anfahren und Beschleunigen möglich.

Vorzugsweise werden bei dem Verfahren während der parallelen Übertragung eines Drehmoments im ersten Getriebepfad und eines Zusatzdrehmoments im zweiten Getriebepfad die erste und die zweite Kupplung im Schlupf betrieben. Hierdurch ist es möglich, dass sich die Drehmomentflüsse quasi selbstregelnd auf die beiden parallel wirkenden Pfade aufteilen. Ferner werden potentiell zerstörerische Effekte durch eine fest geschlossene Kupplung vermieden.

Grundsätzlich ist es möglich, die Übertragung eines Zusatzdrehmoments über den zweiten Getriebepfad zu beenden, sobald das gesamte von der Antriebswelle zur Ausgangswelle übertragene Drehmoment wieder im Kapazitätsbereich des ersten Getriebepfades liegt. Vorzugsweise wird indes die parallele Aktivität des ersten und des zweiten Getriebepfades so lange beibehalten, bis ein Umschalten aus dem ersten Getriebepfad in einen neuen Getriebepfad erfolgt.

Weiterhin ist es bevorzugt, dass der zur Übertragung des Zusatzdrehmoments (z.B. durch entsprechende Einstellung von Schiebemuffen) gewählte zweite Getriebepfad der zum ersten Getriebepfad nächst höheren Gangstufe entspricht. In diesem Falle führt ein einfaches Hochschalten aus dem ersten Getriebepfad in den zweiten Getriebepfad. Dies ist besonders vorteilhaft, da sich der zweite Getriebepfad bereits am Arbeitspunkt befindet und das Umschalten somit ohne weitere Verzögerung erfolgen kann.

Die zweite Kupplung wird bei dem Verfahren vorteilhafterweise allenfalls so weit geschlossen, dass das im zweiten Getriebepfad übertragene Zusatzdrehmoment eine vorgegebene Obergrenze nicht überschreitet, wobei die Obergrenze vorzugsweise vom Betriebszustand (insbesondere der Gangstufe des zweiten Getriebepfades) abhängt. Auf diese Weise wird sichergestellt, dass auch die begrenzte Drehmomentkapazität des zweiten Getriebepfades eingehalten wird.

Gemäß einer anderen Weiterbildung des Verfahrens wird die erste Kupplung, über welche definitionsgemäß im aktuellen Betriebszustand des Getriebes hauptsächlich oder ausschließlich das Drehmoment von der Antriebswelle zur Ausgangswelle übertragen wird, permanent mit einem geringfügigen Schlupf betrieben. Alternativ kann die genannte erste Kupplung auch erst bei einem (vorhergesagten oder eingetretenen) Anstieg der Leistungsanforderung in einen Zustand mit geringfügigem Schlupf versetzt werden. Vorteilhafterweise wird in beiden Fällen, d. h. der permanenten und der veranlassten Betriebsweise mit geringfügigem Schlupf der ersten Kupplung, parallel die zweite Kupplung mit dem zweiten Getriebepfad aktiviert (und zwar typischerweise ebenfalls mit Schlupf). Durch die beschriebenen Maßnahmen wird das Getriebe optimal auf einen Leistungsanstieg vorbereitet, bei welchem zur bestmöglichen Ausnutzung des Motors schnell ein Zusatzdrehmoment vom zweiten Getriebepfad übernommen werden muss.

Bei einer anderen Ausführungsform des Verfahrens entspricht der erste Getriebepfad einer höheren (z.B. der zweiten) Gangstufe und der zweite Getriebepfad einer niedrigeren (z.B. der ersten) Gangstufe des Getriebes. Eine solche Konstellation eignet sich insbesondere für das Anfahren im zweiten Gang, welches unter bestimmten Bedingungen (z.B. im Winter) in Frage kommen kann. In diesem Falle wird das Zusatzdrehmoment über den ersten Gang übertragen, was den Vorteil hat, dass dieser für ein eventuelles Zurückschalten des Getriebes bereits vorbereitet ist.

Die Erfindung betrifft ferner ein Doppelkupplungsgetriebe mit mindestens zwei Kupplungen zur Übertragung von Drehmoment von einer Antriebswelle zu einer Ausgangswelle über verschiedene, wählbare Getriebepfade. Das Getriebe enthält ferner eine Steuerung zur Betätigung der Kupplungen, welche dazu eingerichtet ist, ein Verfahren der oben beschriebenen Art auszuführen. D. h., dass die Steuerung eine zweite Kupplung zumindest teilweise schließt, um über einen zweiten Getriebepfad ein Zusatzdrehmoment zu übertragen, wenn das über die momentan aktive erste Kupplung und einen ersten Getriebepfad übertragene Drehmoment eine vorgegebene Obergrenze überschreitet. Bei einem derart eingerichteten Doppelkupplungsgetriebe werden die ohnehin vorhandenen parallelen Getriebepfade somit dazu ausgenutzt, das vom Motor bereitstellbare Drehmoment optimal auszuschöpfen.

Gemäß einer Weiterbildung des Doppelkupplungsgetriebes weist dieses zwei verschiedene ausgangsseitige Zahnräder (z.B. Ritzel) auf, über welche Drehmoment in ein Achsgetriebe (z.B. Differential) eingeleitet werden kann. Da ein derartiges Zahnrad häufig die Schwachstelle eines Getriebepfades darstellt, wird durch die Bereitstellung von zwei Zahnrädern die gesamte Drehmoment-Übertragungskapazität des Getriebes entsprechend erhöht.

Des Weiteren ist bei dem Doppelkupplungsgetriebe der Quotient zwischen dem Übersetzungsverhältnis des ersten Ganges und dem Übersetzungsverhältnis des zweiten Ganges (und/oder zwischen dem Übersetzungsverhältnis des zweiten Ganges und dem Übersetzungsverhältnis des dritten Ganges) vorzugsweise kleiner als 2,0 : 1, besonders bevorzugt kleiner als 1,5 : 1. Wenn beispielsweise der zweite Gang ein Übersetzungsverhältnis von i₂ = 2 hat, ist dasjenige des ersten Ganges vorzugsweise kleiner als 4 (iᵢ < 4, d.h. i₁:i₂ < 2,0:1), besonders bevorzugt kleiner als 3 (i₁ < 3, d.h. i₁:i₂ < 1,5:1).

Im Folgenden wird die Erfindung mit Hilfe der Figuren beispielhaft erläutert. Es zeigen:
- Fig. 1: schematisch ein erfindungsgemäßes Doppelkupplungsgetriebe;
- Fig. 2: das Doppelkupplungsgetriebe von Figur 1 bei Übertragung eines primären Drehmoments über den zweiten Gang und eines Zusatzdrehmoments über den dritten Gang;
- Fig. 3: das Doppelkupplungsgetriebe von Figur 1 bei Übertragung eines primären Drehmoments über den zweiten Gang und eines Zusatzdrehmoments über den fünften Gang;
- Fig. 4: den zeitlichen Verlauf von Motormoment und Eingangsmomenten der Kupplungen bzw. Getriebepfade, Raddrehmoment und Gaspedalstellung bei Durchführung eines erfindungsgemäßen Verfahrens;
- Fig. 5: den Zeitverlauf von Drehmomenten der Getriebepfade, Motordrehzahl und Gaspedalstellung bei einem Schaltvorgang;
- Fig. 6: den Zeitverlauf von Motordrehzahl, Raddrehmoment und Gaspedalstellung beim Anfahren mit mehreren Schaltvorgängen für ein erfindungsgemäßes und ein herkömmliches (gestrichelte Kurven) Verfahren;
- Fig. 7: den Zeitverlauf von Motordrehzahl und der Getriebedrehzahl, Raddrehmoment und Gaspedalstellung bei mehreren Schaltvorgängen für ein erfindungsgemäßes und ein herkömmliches (gestrichelte Kurven) Verfahren;
- Fig. 8: den Zeitverlauf von Kupplungsdrehmomenten, Motordrehzahl und Getriebeeingangsdrehzahl sowie der Gaspedalstellung bei einem gezielten Losbrechen der Kupplung für einen geregelten Schlupfbetrieb;
- Fig. 9: eine Darstellung entsprechend Figur 8 bei einem permanent geregelten Schlupfbetrieb;
- Fig. 10: eine Darstellung entsprechend Figur 8 bei einem Anfahren im zweiten Gang.

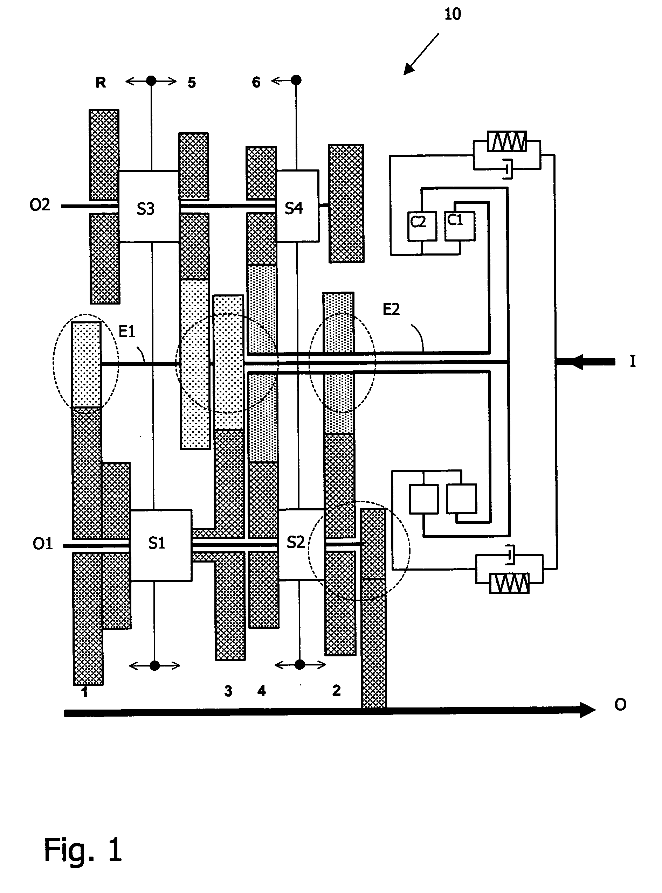

Figur 1 zeigt schematisch die Komponenten eines Doppelkupplungsgetriebes 10. Das Getriebe weist als Eingang eine Antriebswelle I auf, welche in einem Kraftfahrzeug mit der Kurbelwelle des Verbrennungsmotors (nicht dargestellt) gekoppelt ist. Die Eingangswelle I des Getriebes 10 kann über die schematisch angedeutete Kupplung C2 mit einer ersten Eingangswelle E1 des Getriebes 10 und unabhängig hiervon über eine Kupplung C1 mit einer zweiten Eingangswelle E2 des Getriebes gekoppelt werden, wobei im dargestellten Beispiel die zweite Eingangswelle E2 als Hohlwelle konzentrisch um die erste Eingangswelle E1 herum angeordnet ist. An den genannten Eingangswellen E1, E2 sind verschiedene Zahnräder angeordnet, die zur Ausbildung verschiedener Gangstufen mit Losrädern auf einer ersten Ausgangswelle O1 bzw. einer zweiten Ausgangswelle O2 gekoppelt sind. Die genannten Losräder können bei Einlegen eines Ganges über Schiebemuffen S1, S2, S3, S4 drehfest mit der zugehörigen Ausgangswelle O1 bzw. O2 verbunden werden, wobei die Ausgangswellen O1, O2 ihrerseits mit einer Abtriebswelle O des Getriebes 10 gekoppelt sind.

Bei einem derartigen Vorgelegegetriebe ist insbesondere die Auslegung der Gänge mit hoher Gesamtübersetzung kritisch, da auf der Eingangsseite von einem kleinen Zahnrad auf ein größeres Zahnrad auf der Ausgangsseite getrieben wird und die kleinen Zahnräder aufgrund ihrer Abmaße die Drehmomenttragfähigkeit des Getriebes bestimmen. Die eingeschränkte Übertragungskapazität für Drehmomente kann zum Teil erheblich sein und z.B. bis zu 50% des Nennmoments des für die höheren Gänge typischen Wertes betragen. Um die entsprechenden Gänge zu schützen, wird üblicherweise ein Eingriff über die Steuerung des Verbrennungsmotors vorgenommen, mit dem eine Beschränkung des Drehmoments bewirkt bzw. Drehmoment oberhalb einer bestimmten Grenze abregelt wird. Das Getriebe muss daher nicht mehr Drehmoment übertragen, als es seiner vorgegebenen Kapazität entspricht.

In Figur 1 sind die typischen "Schwachstellen" eines Vorgelegegetriebes 10 durch gestrichelte Kreise gekennzeichnet. Sie liegen beim ersten, zweiten und teilweise auch dritten Gang sowie beim Achsantrieb, d.h. dem Ritzel der Ausgangswelle, das mit dem typischerweise am Differential angeordneten Ringrad kämmt. Bei Anfahrvorgängen im ersten Gang kann z.B. in einem Getriebe, das für 450 Nm Drehmomentkapazität ausgelegt ist, nur 280 Nm übertragen werden. Bei einer Volllastanfahrt muss der Motor daher auf maximal 280 Nm abgeregelt werden, da sonst das Getriebe beschädigt würde. Die Differenz zum vollen Drehmoment des Verbrennungsmotors kann nicht genutzt werden.

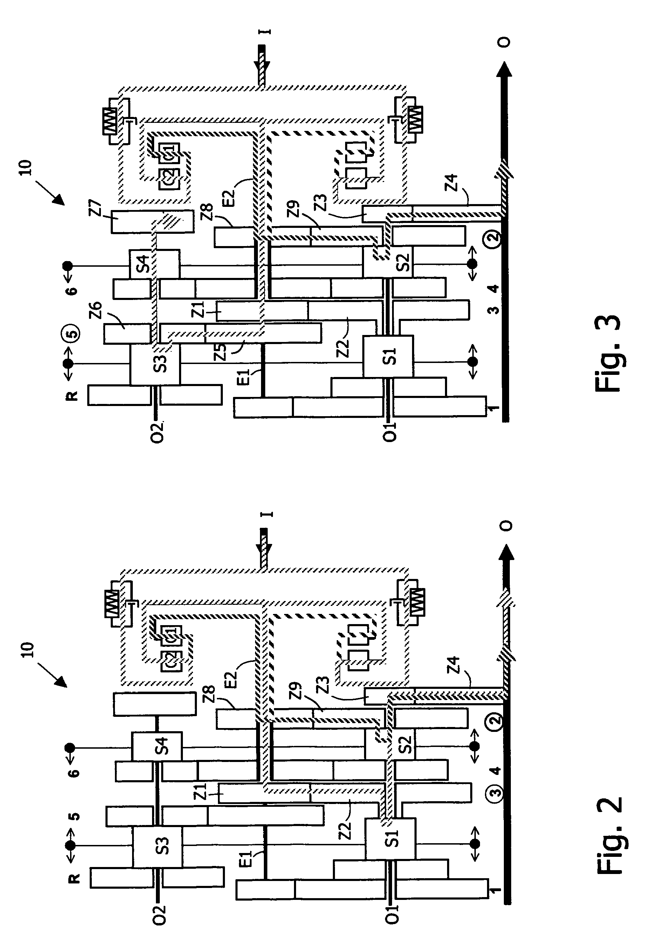

Zur Verbesserung dieser Situation wird erfindungsgemäß die Eigenschaft des Doppelkupplungsgetriebes 10 ausgenutzt, dass dort zwei Pfade zur Übertragung von Drehmomenten zur Verfügung stehen. Figur 2 zeigt diesbezüglich das Doppelkupplungsgetriebe 10 im Betriebszustand mit gekennzeichneten aktiven Getriebepfaden. Soweit nichts anderes erwähnt wird, sind die Schaltmuffen S1 bis S4 in ihrer Neutralstellung. Primär ist der zweite Gang eingelegt, bei welchem Drehmoment von der Antriebswelle I über eine erste Kupplung C1, die Hohlwelle E2, das Zahnrad Z8, das Zahnrad Z9, die Schaltmuffe S2 (die sich in der Stellung des zweiten Ganges befindet) sowie die Zahnräder Z3 und Z4 an die Ausgangswelle O abgegeben wird. Dieser erste Getriebepfad überträgt entsprechend seiner Nennkapazität, z.B. bis zu einem Wert des Drehmoments von 280 Nm.

Falls erforderlich, wird das darüber hinaus zur Verfügung stehende Motormoment (z.B. bis 450 Nm) von der zweiten Kupplung C2 über einen zweiten Getriebepfad übertragen. Der zweite Getriebepfad verläuft dabei in Figur 2 über die Welle E1, die Zahnräder Z1 und Z2, die Schaltmuffe S1 (welche sich in der Position des dritten Ganges befindet) und die Zahnräder Z3 und Z4 zur Ausgangswelle O. Mit anderen Worten wird der zweite Gang durch die Übertragung eines Zusatzdrehmoments über den dritten Gang unterstützt. Das über die Drehmoment-Übertragungskapazität von 280 Nm hinaus verfügbare Motormoment von 170 Nm wird somit nicht wie beim Stand der Technik durch Abregeln des Motors unterdrückt, sondern steht zur Nutzung zur Verfügung. Da das Verfahren vorzugsweise nur bei großen Drehmomenten zur Anwendung kommt, entfallen auch Probleme mit einer technisch schwierigen und mangelhaften Regelauflösung im Bereich kleiner Drehmomente.

Figur 3 zeigt eine gegenüber Figur 2 dahingehend abgewandelte Situation, dass der zweite Getriebepfad über den fünften Gang geführt wird. Er umfasst somit die Kupplung C2, die Welle E1, die Zahnräder Z5 und Z6, die Schiebemuffe S3 (die sich in der Stellung des fünften Ganges befindet) sowie das zum Achsantrieb gehörende Zahnrad Z7. Bei dieser Bauart des Getriebes wird somit das Zusatzdrehmoment über einen zweiten Achsantrieb (Kombination aus Ritzel und Ringrad am Differential) an das Fahrzeug geleitet.

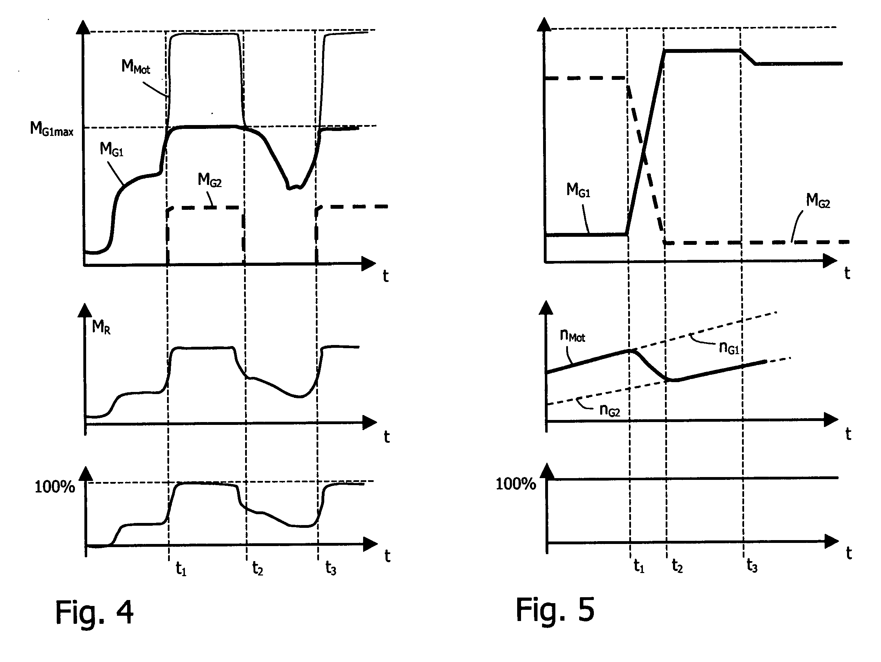

Figur 4 zeigt parallel den zeitlichen Verlauf des Motormoments M_{Mot} sowie des Eingangsmoments im ersten Getriebepfad M_{G1} bzw. im zweiten Getriebepfad M_{G2} (oberes Diagramm), den zeitlichen Verlauf des Drehmoments M_{R} am Rad, welcher der Fahrzeugbeschleunigung entspricht (mittleres Diagramm), sowie den zeitl i-chen Verlauf der relativen Fahrpedalstellung, wobei 100% einer vollständig geöffneten Drosselklappe (Vollgas) entspricht (unterstes Diagramm). Das Eingangsdrehmoment M_{G1} an der ersten Kupplung muss bei einer Obergrenze M_{G1max} begrenzt werden, um den ersten Getriebepfad vor einer Beschädigung zu schützen. Wie oben erläutert erfolgt beim Stand der Technik diese Begrenzung durch eine entsprechende Abregelung des Motors. Bei dem vorgeschlagenen Doppelkupplungsgetriebe findet jedoch die beschriebene parallele Übertragung von Drehmoment über den zweiten Getriebepfad statt, so dass an der zweiten Kupplung entsprechende Eingangsmomente M_{G2} auftreten, wenn das Eingangsmoment M_{G1} der ersten Kupplung an die Obergrenze M_{G1max} stößt. Dementsprechend kann durch die Summe (M_{G1} + M_{G2}) der Eingangsmomente ein bis zu seinem Maximalwert ansteigendes Motormoment M_{Mot} übertragen werden. Daher kann z.B. bei einem Anfahrvorgang mit Volllast das gesamte vom Motor zur Verfügung gestellte Drehmoment genutzt werden.

Wenn im Verlaufe des Fahrens vom Fahrer die Gaspedalstellung wieder zurückgenommen und weniger Drehmoment angefordert wird, wird zunächst das Zusatzdrehmoment im zweiten Getriebepfad M_{G2} durch entsprechendes Öffnen der zugehörigen Kupplung abgesenkt, bis schließlich zum Zeitpunkt t₂ der als Basis genutzte erste Getriebepfad wieder das gesamte Motormoment M_{Mot} übertragen kann.

Eine parallele Übertragung eines Zusatzdrehmoments über einen zweiten Getriebepfad setzt voraus, dass das vom Motor zur Verfügung gestellte Drehmoment M_{Mot} mit der aktuellen, für den eingelegten Gang und die Betriebsart des Getriebes zulässigen Obergrenze verglichen wird. Im Falle einer Überschreitung der genannten Obergrenze kann dann der Überschussanteil des Motordrehmoments über den zweiten Getriebepfad abgeleitet werden. Die Obergrenze dieses abgeleiteten und dem Fahrzeug zur Verfügung gestellten Zusatzdrehmoments am Rad (bzw. die Obergrenze der Fahrzeugbeschleunigung) wird aus der aktuellen Betriebskonfiguration des Fahrzeugs (z.B. Frontantrieb, Heckantrieb oder Allradantrieb) abgeleitet. Bei umschaltbaren Konfigurationen wird dabei vorzugsweise die entsprechende Konfiguration abgefragt. In anderen Fällen wird aus der Fahrsituation und der Interaktion des Fahrers mit dem Gaspedal die entsprechende Getriebebetriebsart und der Umfang des abgeleiteten Zusatzdrehmoments automatisch ermittelt.

Figur 5 zeigt untereinander den zeitlichen Verlauf des über den ersten/zweiten Getriebepfad geleiteten Drehmoments M_{G1} bzw. M_{G2} (oberes Diagramm), den zeitlichen Verlauf der Motordrehzahl n_{Mot} und der Drehzahlen n_{G1}, n_{G2} der Teilgetriebe (mittleres Diagramm) sowie den zeitlichen Verlauf der Fahrpedalstellung (unteres Diagramm). Dabei wird das Doppelkupplungsgetriebe so gesteuert, dass nicht nur beim Anfahrvorgang der erste und der zweite Getriebepfad parallel genutzt werden, sondern darüber hinaus auch bis zum Erreichen des Schaltpunktes vom ersten in den zweiten Gang oder alternativ geeigneter weiterer höherer Gänge und Gangkombinationen (Zeitpunkt t₁).

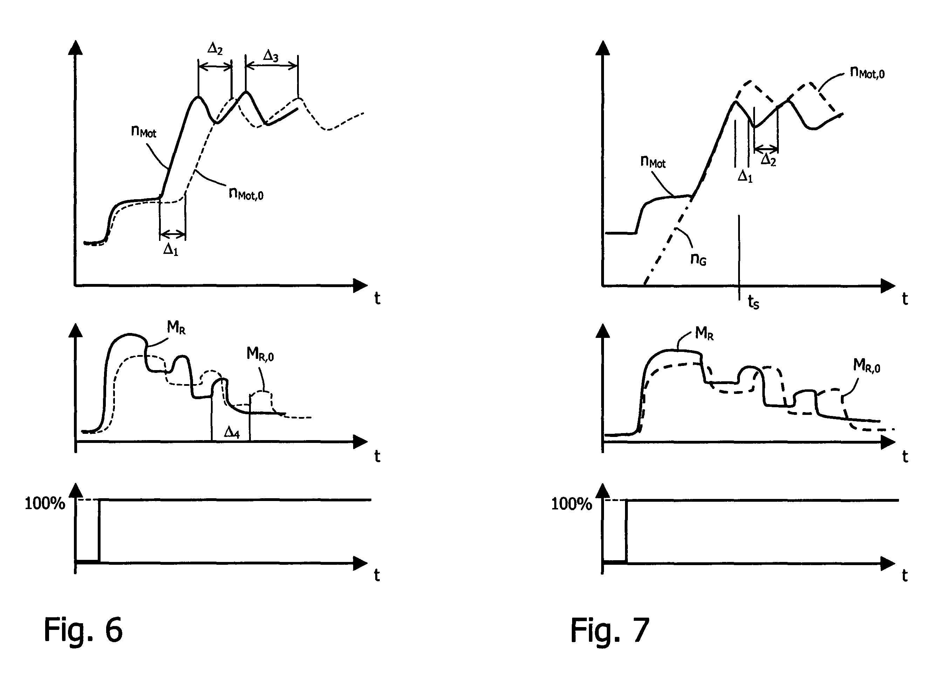

Figur 6 zeigt untereinander den zeitlichen Verlauf der Drehzahlen des Motors am Getriebeeingang bei erfindungsgemäßer Drehmomentableitung (durchgezogene Kurve n_{Mot}) bzw. bei einer Steuerung gemäß dem Stand der Technik (gestrichelte Kurve n_{Mot,0}) (oberes Diagramm); des Radmoments mit (durchgezogene Kurve M_{R}) bzw. ohne (gestrichelte Kurve M_{R,0}), die erfindungsgemäße Drehmomentableitung (mittleres Diagramm); sowie die Gaspedalstellung (unteres Diagramm). Aufgrund der höheren Ausnutzung des Motordrehmoments findet beim dargestellten Volllastanfahren eine stärkere Beschleunigung des Fahrzeugs statt, die zu entsprechenden Zeitverkürzungen Δ₁, Δ₂, Δ₃ für die Schaltvorgänge in eine höhere Gangstufe führt.

Die Zeit, für welche die dem zweiten Getriebepfad zugeordnete Kupplung schlupfend Drehmoment überträgt, ist in der Regel verhältnismäßig kurz. Daher ist der Eintrag von Verlustleistung an dieser Kupplung ohne Probleme beherrschbar. Die aus Figur 6 ersichtliche Verkürzung des Anfahrvorganges und die Steigerung des Beschleunigungsverhaltens bringt eine Steigerung der Fahrleistung mit sich und ermöglicht die Optimierung des Kühl- und Hydrauliksystems. Da durch den kürzeren Anfahrzeitraum die Gesamtmenge der in das Getriebe eingetragenen Verlustenergie sinkt, kann das Kühlsystem entsprechend kleiner ausgelegt werden. Dabei ist zu beachten, dass eine Volllastanfahrt einer der kritischen Auslegungspunkte für ein Getriebekühlsystem ist, da hier große Mengen an Verlustleistung abgeführt werden müssen. Da bei kleinen Fahrgeschwindigkeiten die Umströmung des Kühlers nur gering ist, hat dieser einen entsprechend schlechten Wirkungsgrad. Weiterhin muss bei Doppelkupplungsgetrieben mit nassen Kupplungen das System durch Umwälzung von Öl gekühlt werden. Da die zum Anfahren verwendeten Drehzahlen klein sind, muss bei der Auslegung des hydraulischen Systems die Pumpenkapazität entsprechend groß gemacht werden, um die benötigte Fördermenge zur Verfügung zu stellen. Grundsätzlich versucht man indes, die Fördermenge der Pumpe so klein wie möglich zu halten, um die zum Antrieb der Pumpe benötigte Antriebsleistung zu minimieren (Antriebsleistung Pumpe = Förderstrom * Druck). Dies ist insbesondere wichtig, da die Pumpe den größten Verbraucher in einem Doppelkupplungsgetriebe darstellt und damit wesentlich den Verbrauch des Fahrzeuges beeinflusst.

Mit dem hier vorgeschlagenen Verfahren gelingt es nun als Nebenaspekt, durch eine Steigerung des zum Anfahren zur Verfügung stehenden Drehmoments den Gesamteintrag der Verlustenergie zu senken. Der Kühler kann verkleinert werden und auch die Förderleistung des hydraulischen Systems kann damit gesenkt werden, was sich positiv auf den Energieverbrauch des Getriebesystems auswirkt.

Figur 7 zeigt eine Figur 6 im Wesentlichen entsprechende Darstellung, wobei im oberen Diagramm neben den Motordrehzahlen n_{Mot} und n_{Mot,0} auch die Eingangsdrehzahl n_{G} des nächst höheren Ganges dargestellt ist. Da bei dem vorgeschlagenen Verfahren ein alternativer Drehmomentpfad bereits komplett vorbereitet wird und es sich hierbei typischerweise um den nächst höheren Gang handelt, können manuell ausgelöste Hochschaltungen (Zeitpunkt t_{S}) unmittelbar und ohne Zeitverzögerung umgesetzt werden. Die benötigten drehmomentübertragenden Pfade und Kupplungen befinden sich bereits voll in ihrem Arbeitspunkt. Hierdurch entsteht beim Schaltvorgang der im oberen Diagramm eingetragene Zeitgewinn Δ₁. Ein weiterer Zeitgewinn Δ₂ wird dadurch erzielt, dass die anschließende Drehzahlanpassungsphase des Motors schneller abgewickelt werden kann, weil das vorhandene Radmoment schon zum Teil vom nächst höheren Gang getragen wird. Die auftretende Beschleunigungsänderung (Ruck) ist somit kleiner und wird vom Fahrer trotz der zeitlichen Verkürzung als komfortabel empfunden. Mit dem Verfahren wird somit eine erhöhte Fahrleistung und eine schnellere Ausführung insbesondere von manuell ausgelösten Hochschaltungen ermöglicht.

Bedingt durch die verkürzte Schaltzeit kann der Zeitpunkt der Hochschaltung ferner zu höheren Motordrehzahlen hin verlegt werden. Damit kann die zur Verfügung stehende Leistung besser ausgenutzt werden, was wiederum der Beschleunigung des Fahrzeugs zugute kommt.

Um bei der parallelen Übertragung von Drehmoment eine gute Kontrollierbarkeit des Systems zu erreichen, werden die an der Verteilung der Last arbeitenden Kupplungen vorzugsweise im Schlupfbetrieb gehalten. Damit wird erreicht, dass die Drehmomente an den Kupplungen eindeutig bekannt sind und ein fehlerhaftes Einstellen von Drehmomenten oder gar ein Verspannen des Getriebes wirkungsvoll verhindert wird.

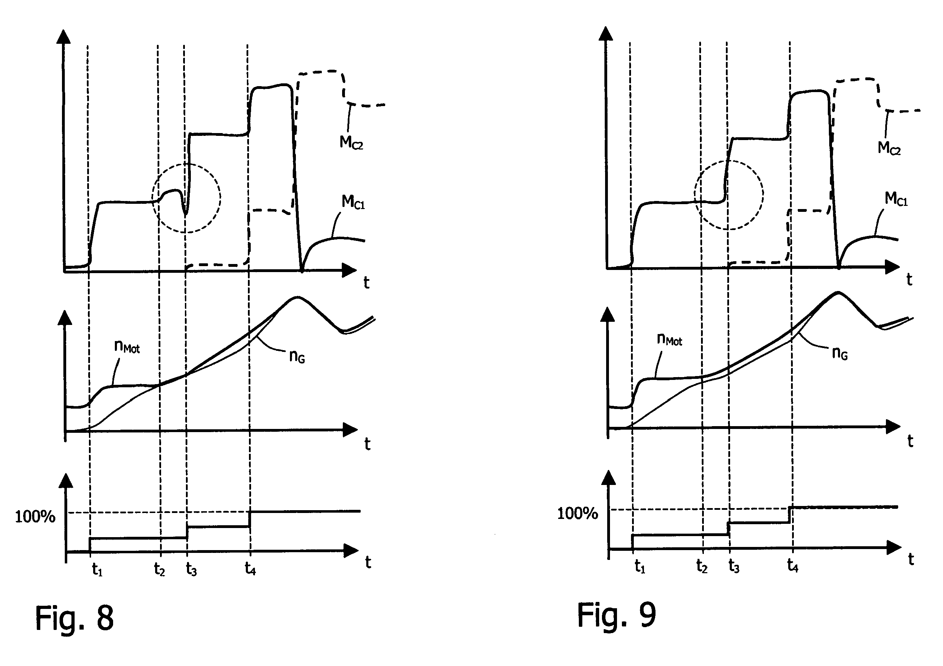

Diesbezüglich existiert eine erste, in Figur 8 illustrierte Methode. Figur 8 zeigt im oberen Diagramm den zeitlichen Verlauf des Drehmoments M_{C1} an einer ersten Kupplung sowie M_{C2} an einer zweiten Kupplung, und im mittleren Diagramm die zugehörigen Verläufe der Motordrehzahl n_{Mot} sowie der Getriebeeingangsdrehzahl n_{G}. Die Fahrpedalstellung ist wiederum im untersten Diagramm dargestellt.

Nach einem normalen Anfahrvorgang, der durch ein völliges Schließen der ersten Kupplung abgeschlossen wird, tritt an der Kupplung kein Schlupf auf. Die Drehmoment-Übertragungskapazität der Kupplung wird dazu leicht über das Niveau des vom Motor erzeugten Drehmoments angehoben. Wenn der Fahrer nun im Zeitpunkt t₃ das Gaspedal weiter betätigt, also mehr Drehmoment anfordert, wird die zuvor noch schlupffreie Kupplung gezielt in Schlupf gebracht. Dazu kann die Kupplungskapazität auf vorherigem Niveau belassen werden und abgewartet werden, bis das Drehmoment des Motors die Drehmoment-Übertragungskapazität der Kupplung übersteigt und diese zu schlupfen beginnt. Vorzugsweise wird indes die Kupplung durch ein kurzes, aktiv kontrolliertes Senken der Übertragungskapazität gezielt zum Schlupfen gebracht. Hierdurch kann der Übergang vom nichtschlupfenden zum schlupfenden Zustand der Kupplung kontrolliert ablaufen. Damit können für den Fahrer störende Effekte wie eine Veränderung des Geräusch- und Beschleunigungsverhaltens sowie ein Überschwingen der Motordrehzahl gezielt unterdrückt werden.

Nach Erreichen des Schlupfzustandes mit geeigneter kleiner Differenzdrehzahl wird der zweite, für die Ableitung des Zusatzdrehmoments vorgesehene Getriebepfad vorbereitet und die betreffende Kupplung so angesteuert, dass ein kleines Drehmoment übertragen wird. Damit ist sichergestellt, dass im Falle einer weiteren plötzlichen Steigerung des vom Fahrer angeforderten Drehmoments (d.h. im Zeitpunkt t₄ von Figur 8) die zur Ableitung benötigte Drehmomentkapazität unmittelbar zur Verfügung gestellt werden kann. Wenn das Fahrzeug bis zum Auslösen einer Schaltung weiter beschleunigt hat, wird vorzugsweise die für die Ableitung des Drehmoments im neuen Gang benötigte Kapazität nach Umlegen des Ganges zur Verfügung gestellt.

Figur 9 zeigt in einer Darstellung entsprechend Figur 8 eine alternative Vorgehensweise, bei welcher nach Abschluss des Anfahrvorganges die erste Kupplung nicht völlig geschlossen wird, sondern permanent mit einem geeigneten kleinen Schlupf betrieben wird (siehe Kreis im oberen Diagramm). Damit sind die Voraussetzungen für eine geeignete Verteilung der Drehmomente an den Kupplungen geschaffen. Der weitere Ablauf erfolgt dann analog zur Situation von Figur 8.

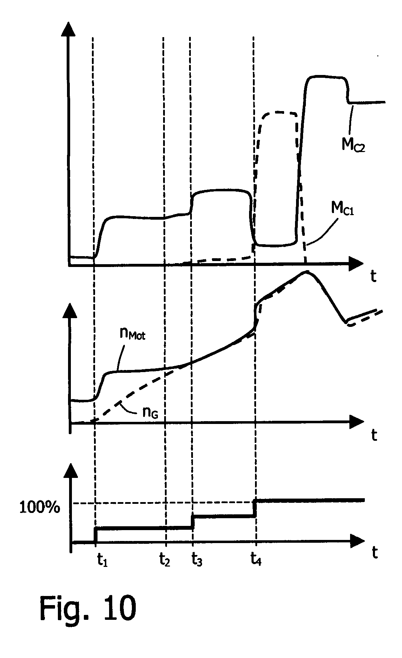

Figur 10 zeigt in einer Darstellung entsprechend den Figuren 8 bzw. 9 ein spezielles Anfahrverfahren. Dabei wird nicht im niedrigsten Gang (also dem ersten Gang) angefahren, sondern in einem höheren Gang, insbesondere dem zweiten Gang. Z. B. kann in der Betriebsart "Winter" ein durch den Fahrer leicht anzusteuerndes Anfahren ermöglicht werden, oder es soll bei Fahrzeugen mit sportlicher Ausrichtung der Verbrauch gesenkt werden, indem in einem Stadtzyklus bei den damit verbundenen Teillasten bzw. niedrigen Drehmomenten immer im zweiten Gang angefahren wird. Bei einem derartigen Anfahren im zweiten Gang wird nun die Kupplung gezielt auf eine Ableitung von Zusatzdrehmoment vorbereitet (vgl. Vorgehen bei den Figuren 8 und 9). Wenn der Fahrer nach einem begonnenen Teillastanfahrvorgang eine wesentlich stärkere Beschleunigung wünscht (Zeitpunkt t₄ in Figur 10), kann diese unmittelbar durch ein Umschalten in den ersten Gang zur Verfügung gestellt werden. Alternativ dazu wäre eine Ableitung des vom zweiten Gang infolge der beschränkten Drehmoment-Übertragungskapazität nicht zu übertragenden Drehmoments z.B. auch in den dritten Gang möglich.

Zusammenfassend wird somit ein Verfahren zur Steuerung von Doppelkupplungsgetrieben bereitgestellt, bei dem durch die Ansteuerung von zusätzlichen Drehmoment-Übertragungselementen neben dem Basisgang die Drehmoment-Übertragungskapazität des Getriebes gesteigert wird. Das Zusatzdrehmoment kann dabei über geeignete Teilgetriebe und/oder über einen anderen Achsantrieb abgeleitet werden. Die Ansteuerung dieser Betriebsart kann durch einen Performanceschalter, durch einen Wahlschalter für einen Allradantrieb und/oder durch ein schnelles Betätigen des Gaspedals im Anfahrbereich erfolgen. Die Drehmomentverteilung findet in den Teilgetrieben in schlupfender Betriebsart statt, wobei Letztere durch gezieltes In-Schlupf-Bringen oder vorbereitendes Schlupfenlassen eingeleitet wird.

Zur Vorbereitung von Volllastbeschleunigungen übernimmt der nicht aktive Getriebezweig vorzugsweise schon im Bereich von Teillasten eine drehmomentübertragende Funktion. Dies gilt sowohl für höhere als auch für niedrigere Gänge. Falls der Fahrer das Gaspedal durchtritt, kann unmittelbar das vom Motor als Überkapazität zur Verfügung gestellte Drehmoment über den zusätzlichen Pfad abgeleitet werden. So kann z.B. im ersten Gang angefahren werden und der zweite Gang vorbereitet sein. Alternativ kann das Fahrzeug z.B. aus Verbrauchsgründen im Stadtzyklus oder im sogenannten Wintermodus grundsätzlich im zweiten Gang angefahren werden, Sobald der Fahrer eine hohe Beschleunigung oder Volllast anfordert, wird der erste Gang zugeschaltet, was eine sehr hohe Fahrzeugbeschleunigung bewirkt.

Das Doppelkupplungsgetriebe 10 ist vorzugsweise im Bereich der unteren Gänge als ein "close ratio" Getriebe ausgelegt, d.h. als ein Getriebe mit enger Abstufung oder kleinen Sprüngen der Übersetzungsverhältnisse zwischen den Gängen. Je kleiner der Gangsprung zwischen zwei Gängen ist, desto mehr Drehmoment am Rad und damit Fahrzeugbeschleunigung kann nämlich der zusätzlich genutzte höhere Gang aus dem abgeleiteten Zusatzdrehmoment des Motors erzeugen. Weiterhin reduziert sich die Verlustleistung am ableitenden zweiten Getriebepfad, da die Differenzdrehzahl kleiner wird (wobei die Verlustleistung das Produkt aus abgeleitetem Drehmoment und Differenzdrehzahl ist).

## Patentansprüche

1. Verfahren zur Steuerung eines Doppelkupplungsgetriebes (10), wobei über eine erste Kupplung (C1) und über einen ersten Getriebepfad (E2, Z8, Z9, S2, Z3, Z4) Drehmoment von einer Antriebswelle (I) an eine Ausgangswelle (O) übertragen wird, und wobei eine zweite Kupplung (C2) zumindest teilweise geschlossen wird, um über einen zweiten Getriebepfad (E1, Z1, Z2, S1, Z3, Z4; E1, Z5, Z6, S3, Z7) ein Zusatzdrehmoment von der Antriebswelle (I) an die Ausgangswelle (O) zu übertragen, wenn das über die erste Kupplung (C1) übertragene Drehmoment eine vorgegebene Obergrenze erreicht,
**dadurch gekennzeichnet, dass**
das vom Motor zur Verfügung gestellte Drehmoment (M_{Mot}) mit einer aktuellen, für den eingelegten Gang und die Betriebsart des Getriebes zulässigen Obergrenze verglichen wird, welche so gewählt wird, dass ein Schutz des ersten Getriebepfades vor einer Drehmomentüberlastung gewährleistet ist, und wobei im Falle einer Überschreitung der genannten Obergrenze der Überschussanteil des vom Motor zur Verfügung gestellten Drehmomentes (M_{Mot}) über den zweiten Getriebepfad abgeleitet wird.

2. Verfahren nach Anspruch 1,
**dadurch gekennzeichnet, dass**
die erste Kupplung (C1) und die zweite Kupplung (C2) im Schlupf betrieben werden.

3. Verfahren nach Anspruch 1 oder 2,
**dadurch gekennzeichnet, dass**
die parallele Aktivität des ersten und des zweiten Getriebepfades beibehalten wird, bis ein Umschalten aus dem ersten Getriebepfad in einen neuen Getriebepfad erfolgt.

4. Verfahren nach mindestens einem der Ansprüche 1 bis 3,
**dadurch gekennzeichnet, dass**
die zweite Kupplung (C2) nur so weit geschlossen wird, dass das Zusatzdrehmoment eine vorgegebene, vom Betriebszustand abhängige Obergrenze nicht überschreitet.

5. Verfahren nach mindestens einem der Ansprüche 1 bis 4,
**dadurch gekennzeichnet, dass**
die erste Kupplung (C1) permanent mit einem geringfügigen Schlupf betrieben wird.

6. Verfahren nach mindestens einem der Ansprüche 1 bis 5,
**dadurch gekennzeichnet, dass**
die erste Kupplung (C1) bei einem vorausgesagten oder eingetretenem Anstieg der Leistungsanforderung mit geringfügigem Schlupf betrieben wird.

7. Verfahren nach mindestens einem der Ansprüche 1 bis 6,
**dadurch gekennzeichnet, dass**
der erste Getriebepfad einem höheren Gang und der zweite Getriebepfad einem niedrigeren Gang entspricht.

8. Doppelkupplungsgetriebe (10) mit mindestens zwei Kupplungen (C1, C2) zur Übertragung von Drehmoment von einer Antriebswelle (I) zu einer Ausgangswelle (O) über verschiedene Getriebepfade sowie mit einer Steuerung zur Betätigung der Kupplungen,
**dadurch gekennzeichnet, dass**
die Steuerung dahingehend ausgebildet ist, ein Verfahren nach mindestens einem der Ansprüche 1 bis 7 auszuführen.

9. Doppelkupplungsgetriebe nach Anspruch 8,
**dadurch gekennzeichnet, dass**
dieses zwei verschiedene Ausgangszahnräder (Z4, Z7) zur Einleitung von Drehmoment in ein Achsgetriebe aufweist.

10. Doppelkupplungsgetriebe nach Anspruch 8 oder 9,
**dadurch gekennzeichnet, dass**
der Quotient der Übersetzungsverhältnisse zwischen dem ersten und dem zweiten und/oder zwischen dem zweiten und dem dritten Gang weniger als 2,0, vorzugsweise weniger als 1,5 beträgt.

## Claims

1. Method for controlling a dual-clutch transmission (10), with torque being transmitted from a drive input shaft (I) to an output shaft (0) via a first clutch (C1) and via a first transmission path (E2, Z8, Z9, S2, Z3, Z4), and with a second clutch (C2) being at least partially closed in order to transmit an additional torque from the drive input shaft (I) to the output shaft (0) via a second transmission path (E1, Z1, Z2, S1, Z3, Z4; E1, Z5, Z6, S3, Z7) when the torque transmitted via the first clutch (C1) reaches a predefined upper limit,
**characterized in that**
the torque (M_{Mot}) provided by the engine is compared with a current permissible upper limit for the selected gear and the operating mode of the transmission, which upper limit is selected so as to ensure that the first transmission path is protected from a torque overload, and the excess component of the torque (M_{Mot}) provided by the engine being diverted via the second transmission path in the event of said upper limit being exceeded.

2. Method according to Claim 1,
**characterized in that**
the first clutch (C1) and the second clutch (C2) are operated with slip.

3. Method according to Claim 1 or 2,
**characterized in that**
the parallel activity of the first and of the second transmission path is maintained until a switch is made from the first transmission path to a new transmission path.

4. Method according to at least one of Claims 1 to 3,
**characterized in that**
the second clutch (C2) is closed only to such an extent that the additional torque does not exceed a predefined upper limit which is dependent on the operating state.

5. Method according to at least one of Claims 1 to 4,
**characterized in that**
the first clutch (C1) is permanently operated with a small degree of slip.

6. Method according to at least one of Claims 1 to 5,
**characterized in that**
the first clutch (C1) is operated with a small degree of slip when a rise in the power demand is predicted or occurs.

7. Method according to at least one of Claims 1 to 6,
**characterized in that**
the first transmission path corresponds to a relatively high gear and the second transmission path corresponds to a relatively low gear.

8. Dual-clutch transmission (10) having at least two clutches (C1, C2) for transmitting torque from a drive input shaft (I) to an output shaft (0) via various transmission paths and having a controller for actuating the clutches,
**characterized in that**
the controller is designed to carry out a method according to at least one of Claims 1 to 7.

9. Dual-clutch transmission according to Claim 8,
**characterized in that**
said dual-clutch transmission has two different output gearwheels (Z4, Z7) for introducing torque into an axle transmission.

10. Dual-clutch transmission according to Claim 8 or 9,
**characterized in that**
the quotient of the transmission ratios between the first and the second and/or between the second and the third gears is less than 2.0, preferably less than 1.5.

## Revendications

1. Procédé de commande d'une transmission à double embrayage (10), dans lequel, par le biais d'un premier embrayage (C1) et par le biais d'une première voie de transmission (E2, Z8, Z9, S2, Z3, Z4), un couple est transmis d'un arbre d'entraînement (I) à un arbre de sortie (O), et dans lequel un deuxième embrayage (C2) est au moins partiellement fermé pour transmettre par le biais d'une deuxième voie de transmission (E1, Z1, Z2, S1, Z3, Z4 ; E1, Z5, Z6, S3, Z7) un couple supplémentaire de l'arbre d'entraînement (I) à l'arbre de sortie (0), lorsque le couple transmis par le premier embrayage (C1) atteint une limite supérieure prédéfinie,
**caractérisé en ce que**
le couple (M_{Mot}) fourni par le moteur est comparé à une limite supérieure actuelle admissible pour la vitesse enclenchée et le type de fonctionnement de la transmission, qui est choisie de telle sorte qu'une protection de la première voie de transmission contre une surcharge de couple soit assurée et où, dans le cas d'un dépassement de ladite limite supérieure, la proportion excessive du couple (M_{Mot}) fourni par le moteur est déviée par la deuxième voie de transmission.

2. Procédé selon la revendication 1,
**caractérisé en ce que**
le premier embrayage (C1) et le deuxième embrayage (C2) fonctionnent en glissement.

3. Procédé selon la revendication 1 ou 2,
**caractérisé en ce que**
l'activité parallèle de la première et de la deuxième voie de transmission est conservée jusqu'à ce qu'il se produise une commutation de la première voie de transmission dans une nouvelle voie de transmission.

4. Procédé selon au moins l'une quelconque des revendications 1 à 3,
**caractérisé en ce que**
le deuxième embrayage (C2) est seulement fermé dans une mesure telle que le couple supplémentaire ne dépasse pas une limite supérieure prédéfinie dépendant de l'état de fonctionnement.

5. Procédé selon au moins l'une quelconque des revendications 1 à 4,
**caractérisé en ce que**
le premier embrayage (C1) est entraîné en permanence avec un léger glissement.

6. Procédé selon au moins l'une quelconque des revendications 1 à 5,
**caractérisé en ce que**
le premier embrayage (C1) est entraîné avec un léger glissement dans le cas d'une augmentation prévue ou effective de la demande de puissance.

7. Procédé selon au moins l'une quelconque des revendications 1 à 6,
**caractérisé en ce que**
la première voie de transmission correspond à une vitesse supérieure et la deuxième voie de transmission à une vitesse inférieure.

8. Transmission à double embrayage (10) comprenant au moins deux embrayages (C1, C2) pour le transfert du couple d'un arbre d'entraînement (I) à un arbre de sortie (0) par le biais de différentes voies de transmission et comprenant également une commande pour l'actionnement des embrayages,
**caractérisée en ce que**
la commande est réalisée de manière à mettre en oeuvre un procédé selon au moins l'une quelconque des revendications 1 à 7.

9. Transmission à double embrayage selon la revendication 8,
**caractérisée en ce que**
celle-ci présente deux roues dentées de sortie différentes (Z4, Z7) pour l'introduction du couple dans une transmission d'essieu.

10. Transmission à double embrayage selon la revendication 8 ou 9,
**caractérisée en ce que**
le quotient des rapports de démultiplication entre la première et la deuxième et/ou entre la deuxième et la troisième vitesses est inférieur à 2,0, de préférence inférieur à 1,5.
